# EUROPEAN PATENT SPECIFICATION

(11) **EP 3 481 624 B1**
(45) Date of publication and mention of the grant of the patent: **08.09.2021**
(21) Application number: 17827057.5
(22) Date of filing: 11.07.2017
(51) Int. Cl.: B29D 30/06, B29C 33/10, F16K 24/04

(54) **VALVE INSERT, AIR VENTING VALVE AND METHOD**
VENTILEINSATZ, ENTLÜFTUNGSVENTIL UND VERFAHREN
INSERT DE SOUPAPE, SOUPAPE D'ÉVACUATION D'AIR ET PROCÉDÉ

(30) Priority: 11.07.2016 FI 20165578
(43) Date of publication of application: 15.05.2019
(73) Proprietor: WD Racing Oy, 37200 Siuro (FI)
(72) Inventor: PENKKIMÄKI, Pekka, 37200 Siuro (FI)
(74) Representative: Papula Oy
(86) International application number: PCT/FI2017/050534
(87) International publication number: WO 2018/011471

(56) References cited:
- KR-A- 20030 001 818
- KR-A- 20030 001 818
- KR-B1- 101 600 324

## Description

The invention relates to a valve insert of an air venting valve and an air venting valve for removing air from a vulcanizing mould, for example from a vulcanizing mould of a vehicle tyre. The invention also relates to a method of operating of a vulcanizing mould of a vehicle tyre.

In vulcanising moulds of vehicle tyres a tyre blank smaller than the inner dimensions of the mould is placed inside the mould, after which the mould is closed. After closing, the tyre blank is caused to expand, whereby it presses against the surface of the mould in its plastic state getting the size and shape of a tyre. During the vulcanizing process, air between the tyre blank and the mould surface has to be removed in order for the surface of the tyre blank to come into a tight contact with the mould surface. The vulcanizing mould comprises venting ducts or bores through which air can be removed from the space between the tyre blank and the mould surface. Typically the vulcanizing mould comprises several hundreds of venting ducts for removing air completely at each point of the mould so that no air pockets remain between the tyre and the mould.

The drawback with the use of the venting ducts is that rubber material of tyre flows into the venting ducts during the vulcanization process. As a result, the outer surface of the finished tyre comprises threadlike projections that must be removed after the vulcanization, which increases the manufacturing costs and time of the tyre. Alternatively, the projections can be left on the tyre surface, which in turn weakens the aesthetic appearance of the tyre. The threadlike projections may also break off and remain in the venting duct which impairs or prevents the air removal from the mould.

The venting ducts of the vulcanization mould can be provided with air venting valves to prevent entry of tyre material into the venting ducts during the vulcanization process. The air venting valve typically comprises a valve sleeve and a venting duct arranged inside the valve sleeve. A movable valve insert provided with a valve disc is placed in the venting duct. A coil spring for pressing the valve disc away from the mould wall towards the tyre blank is arranged around the valve insert. Thus, air is able to exit from the mould via a clearance between the valve disc and the valve sleeve and further via a clearance between the stem of the valve insert and the inner surface of the valve sleeve. As the tyre material being vulcanized moves towards the mould surface, it pushes the valve disc towards the closed position and finally presses the valve disk against the valve sleeve thus closing the venting duct so that the tyre material being vulcanised cannot access the venting duct. The coil spring opens the air venting valve while the tyre blank is being removed from the mould. Document KR-20030001818-A discloses another type of venting valve without any movable parts.

The drawback with the openable and closable air venting valves is that in certain production conditions the tyre material enters the venting duct of the venting valve and thus may cause the sticking of the valve insert. This, in turn, impairs or totally prevents the air venting through the venting valve. The production conditions which can cause the sticking of the valve insert may be e.g. process disturbances or the change to a different type of tyre raw material.

If the sticking of the valve inserts occurs, some or all of the venting valves can be removed and replaced with traditional valve sleeves without valve inserts and with venting bores of desired diameter. When the problems causing the sticking of the valve insert have been solved, the valve sleeves can be replaced again with venting valves having movable valve inserts. A disadvantage of this method is that the replacement of the venting valves is quite time consuming and difficult.

The object of the present invention is to provide a solution by means of which the problems described above can be reduced.

The object according to the invention can be achieved by a valve insert according to claim 1, air venting valve according to claim 4 and a method according to claim 7.

The valve insert according to the invention comprises a valve stem arranged to be inserted into a valve sleeve of the air venting valve. The first end of the valve stem is provided with a valve disk and the second end of the valve stem is provided with means for detachably attaching the valve insert to the valve sleeve. The valve insert comprises a venting bore for removing air from the vulcanizing mould. An opening of the venting bore is located on a front surface of the valve disk.

Significant advantages can be achieved by means of the invention. The valve insert according to the invention can be used in venting valve which is provided with movable valve insert after the movable valve insert has been removed from the valve sleeve and vice versa. This enables a fast change between two different venting technologies, i.e. the traditional technology, in which the venting ducts of the mould remain open throughout the vulcanization process, and the technology, in which the venting ducts are closed by the movable valve insert of the venting valves. Since the valve insert is detachably attached to the valve sleeve, the valve inset can removed and replaced with a different type of a valve insert quickly and easily as the replacement of the valve insert is much easier than the replacement of the entire air venting valve.

In the following, the invention will be described in more detail by means of examples with reference to the attached drawings, wherein
fig. 1 shows an air venting valve according to an embodiment of the invention,
figs. 2 and 3 show a valve insert of the air venting valve of fig. 1,
fig. 4 shows the air venting valve of fig. 1 which is provided with a different type of a valve insert.

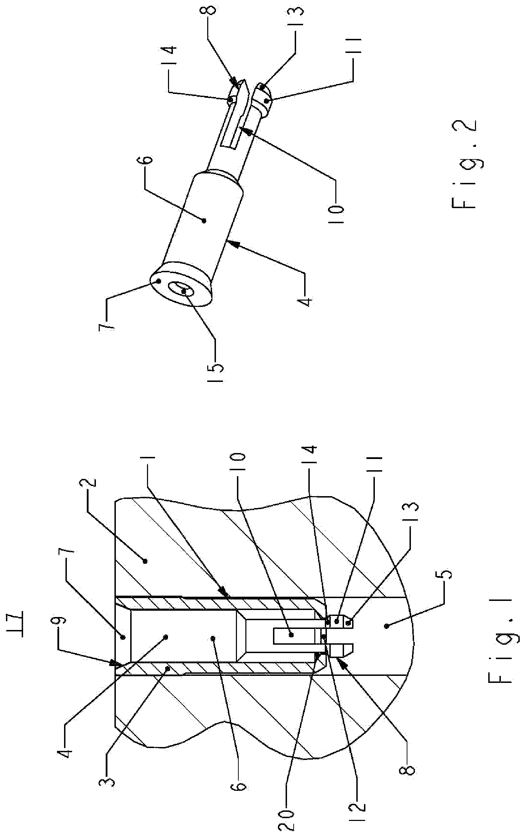

Fig. 1 shows an air venting valve 1 for removing air from a vulcanizing mould 2, e.g. a vulcanizing mould of a vehicle tyre. Typically the vulcanizing mould 2 comprises 1000-4000 air venting valves 1. The air venting valve 1 comprises a valve sleeve 3 and a valve insert 4 inserted into the valve sleeve 3. The valve sleeve 3 is attached to a venting duct 5 of the vulcanizing mould 2 e.g. by a press fit. The valve sleeve 3 is cylindrical. The outer diameter of the valve sleeve 3 is typically 1.5-4 mm.

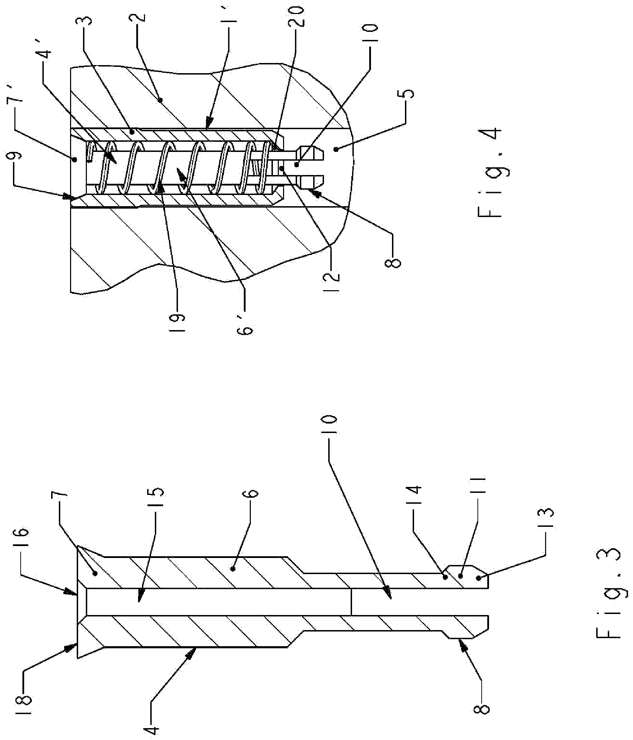

The valve insert 4 of the venting valve 1 comprises a valve stem 6, first end of which is provided with a valve disk 7 and the second end with means 8 for detachably attaching the valve insert to the valve sleeve. The valve insert 4 is attached to the valve sleeve 3 by a detachable connection, for example detachable snap connection. The valve insert 4 is shown in more detail in figs. 2 and 3. The first end of the valve sleeve 3 comprises a conical seat surface 9 against which the valve disk 7 is arranged. The air venting valve 1 shown in fig. 1 is provided without a spring for moving valve insert 4.

The means for detachably attaching the valve insert to the valve sleeve comprises an elastically compressible and/or elastically deformable retainer member 8 provided at the second end of the valve stem 6. The retainer member 8 is arranged to be compressed when the valve insert 4 is removed from and inserted into the valve sleeve 3.

The retainer member 8 comprises a slot 10 at the second end of the valve stem 6, by means of which the compression of the retainer member 8 is achieved. The slot 10 extends from the second end of the valve stem 6 towards the first end of the valve stem 6. Additionally, the retainer member comprises a collar 11 at the second end of the valve stem 6. The slot 10 extends through the collar 11. The outer diameter of the collar 11 in the uncompressed state of the retainer member is larger than the inner diameter of the opening 12 of the second end of the valve sleeve 3. The collar 11 comprises a first surface 13, which is arranged to abut the edge of the opening 12, when the valve insert 4 is inserted into the valve sleeve 3. The first surface 13 is conical. Further, the collar 11 comprises a second surface 14, which is arranged to abut the edge of the opening 12, when the valve insert 4 is removed from the valve sleeve 3. The second surface 14 is conical. When the valve disk 7 is against the seat surface 9, the retainer member 8 is against the edge of the opening 12 at the second end of the valve sleeve 3, thus retaining the valve insert 4 stationary in the valve sleeve 3.

The valve insert 4 comprises a venting bore 15 for removing air from the vulcanizing mould 2. The opening 16 of the venting bore 15 is located on a front surface 18 of the valve disk 7, i.e. on the surface of the valve disk which faces the interior 17 of the vulcanizing mould 2. The opening 16 of the venting bore 15 is completely surrounded by the edge of the front surface of the valve disk 7. Typically, the opening 16 of the venting bore 15 is located in the centre of the front surface 18 of the valve disk 7. The other opening of the venting bore 15 is located on a bottom of the slot 10. The diameter of the venting bore 15 and the opening 16 thereof can be selected as desired. The end of the valve sleeve 3 is at the same level as the front surface 18.

Fig. 4 shows an air venting valve 1' which comprises a valve sleeve 3 similar to that of fig. 1. The valve insert 4' is of a different type than the valve insert shown in figs. 1-3. The valve insert 4' does not comprise a venting bore through which air can be removed from the mould 2. The air venting valve 1' comprises a spring member 19 such as a coil spring for urging the valve insert 4' towards an open position, in which air can be removed from the vulcanization mould 2 through the clearance between the valve disk 7' and the seat surface 9, and further through the clearance between the outer surface of the valve insert 4' and the inner surface of the valve sleeve 3. The spring member 19 is arranged around the stem 6' of the valve insert 3. The valve sleeve 3 comprises a support surface 20 for the spring member 19. The spring member 19 is arranged between the support surface 20 and the back surface of the valve disk 7'. One end of the spring member 19 is arranged against the support surface. The other end of the spring member 19 is arranged against the back surface of the valve disk 7'. The support surface 20 surrounds the valve stem 6', 6 (fig. 1). The valve stem 6' is longer than that in the embodiment of figs. 1-3 so as to achieve the opening movement of the valve insert 4'. The retainer member 8 limits the opening movement of the valve insert 4'. During the vulcanization process the tyre to be vulcanized expands and urges the valve insert 4' to a closed position, in which the valve disk 7' is against the seat surface and no air is allowed to flow through the venting valve 1'. The retainer member 8 of the valve insert 4' can be similar to that of figs. 1-3.

If, for some reason, during the operation of the vulcanizing mould tyre material enters the space between the valve insert 4' and the valve sleeve 3, the valve insert 4' may stick in the valve sleeve 3, which impairs or totally prevents the air removal through the venting valve 1'. In this case the valve insert 4' can be detached and removed from the valve sleeve 3 and replaced with a different type of a valve insert, e.g. with the valve insert 4 shown in figs. 1-3.

The removal of the valve insert 4' is performed by pushing the retainer member 8 from the venting duct 2 of the vulcanizing mould 1 towards the interior of the vulcanizing mould 1. The retainer member 8 is elastically compressed and deformed as it abuts the opening 12 and passes through the opening 12 of the valve sleeve 3. When the retainer member 8 has been brought through the opening 12, the valve insert 4' and the spring member 19 can be removed from the valve sleeve 3 through the opening at the first of the valve sleeve 3. Thereafter, the valve insert of different type, e.g. the valve insert shown 4 in figs. 1-3, is inserted into and detachably attached to the valve sleeve 3. The retainer member 8 of the valve insert 4 abuts the edge of the opening 12 of the second end of the valve sleeve 3 and is elastically compressed and deformed such that the retainer member 8 can be brought through the opening 12. Finally, the valve disk 7 abuts the seat surface 9 of the valve sleeve. The retainer member 8 is against the edge of the opening 12 of the valve sleeve, thus retaining the valve insert 4 stationary in the valve sleeve 3. When the necessary number of valve inserts 4' has been replaced, the vulcanizing mould 1 can be operated again. With the valve inserts shown in figs. 1-3 sticking of the valve insert does not occur. When the problems causing the sticking of the valve insert has been solved, the valve insert 4 can be replaced with the valve insert of a different type, e.g. with the valve insert 4' and spring member 19 shown in fig. 4.

## Claims

1. A valve insert (4) for use in an air venting valve (1) of a vulcanizing mould (2) of a vehicle tyre, said valve insert (4) comprising a valve stem (6) arranged to be inserted into a valve sleeve (3) of the air venting valve (1), a first end of said valve stem (6) being provided with a valve disk (7), wherein the second end of the valve stem (6) is provided with an elastically compressible retainer member (8) for detachably attaching the valve insert (4) to the valve sleeve (3) and **characterised by** comprising; a slot (10) for achieving the compression of the retainer member (8), said slot (10) extending from the second end of the valve stem (6) towards the first end of the valve stem (6), and wherein the valve insert (3) comprises a venting bore (15) for removing air from the vulcanizing mould (2) and an opening (16) of the venting bore (15) is located on a front surface (18) of the valve disk (7), and further **characterised in that**;
another opening of the venting bore (15) is located on a bottom of the slot (10).

2. The valve insert (4) according to claim 1, **characterized in that** the retainer member (8) comprises a collar (11) at the second end of the valve stem (6), which collar (11) is arranged to abut the opening of the valve sleeve (3) when the valve insert (4) is removed from and inserted into the valve sleeve (3).

3. The valve insert (4) according to claim 1 or 2, **characterized in that** an opening (16) of the venting bore (15) is surrounded by an edge of the valve disk (7).

4. An air venting valve (1) for removing air from a vulcanizing mould (2) of a vehicle tyre, which air venting (1) valve comprises a valve sleeve (3), **characterized in that** a valve insert (4) according to any of the preceding claims is detachably attached to the valve sleeve (3).

5. The air venting valve (1) according to claim 4, **characterized in that** the air venting valve (1) is provided without a spring member for moving the valve insert (4).

6. The air venting valve (1) according to claim 4 or 5, **characterized in that** the retainer member (8) of the valve insert is against the opening (12) of the valve sleeve when the valve disk (7) is against a seat surface (9) of the valve sleeve (3).

7. A method of operating of a vulcanizing mould (2) of a vehicle tyre, in which method air is removed from the vulcanizing mould (2) through air venting valves (1'), which air venting valve (1') comprises a valve sleeve (3) attached to a venting duct (5) of the vulcanizing mould (2) and a valve insert (4') detachably attached to the valve sleeve (3), said valve insert (4') being without a venting bore (15) and comprising a valve stem (6'), the first end of which is provided with a valve disk (7'), the second end with means (8) for detachably attaching the valve insert (4') to the valve sleeve (3), and a spring member (19) for urging the valve insert (4') towards an open position, **characterized in that**;
in the case of the valve insert (4') sticking in the valve sleeve (3), the valve insert (4') is detached and removed from the valve sleeve (3), the spring member (19) is removed from the valve sleeve (3), and a valve insert (4) according to any of claims 1 - 3 is inserted into and detachably attached to the valve sleeve (3).

## Patentansprüche

1. Ventileinsatz (4) zur Verwendung in einem Entlüftungsventil (1) einer Vulkanisierform (2) eines Fahrzeugreifens, wobei der Ventileinsatz einen Ventilschaft (6) umfasst, der angeordnet ist, um in eine Ventilhülse (3) des Entlüftungsventils (1) eingesetzt zu werden, wobei ein erstes Ende des Ventilschafts (6) mit einem Ventilteller (7) versehen ist, wobei das zweite Ende des Ventilschafts (6) mit einem elastisch komprimierbaren Halteelement (8) zum lösbaren Befestigen des Ventileinsatzes (4) an der Ventilhülse (3) versehen ist und **dadurch gekennzeichnet ist, dass** er aufweist:
einen Schlitz (10) zum Erreichen der Kompression des Halteelements (8), wobei der Schlitz (10) sich von dem zweiten Ende des Ventilschafts (6) in Richtung des ersten Ende des Ventilschafts (6) erstreckt und wobei der Ventileinsatz (3) eine Entlüftungsbohrung (15) umfasst zum Abführen von Luft aus der Vulkanisierform (2) und eine Öffnung (16) der Entlüftungsbohrung (15) auf einer Stirnfläche (18) des Ventiltellers (7) liegt und ferner **dadurch gekennzeichnet ist, dass**
eine andere Öffnung der Entlüftungsbohrung (15) an einem untersten Teil des Schlitzes (10) angeordnet ist.

2. Ventileinsatz (4) nach Anspruch 1, **dadurch gekennzeichnet, dass** das Haltelement (8) einen Kragen (11) an dem zweiten Ende des Ventilschafts (6) aufweist, wobei der Kragen (11) derart angeordnet ist, dass er an der Öffnung der Ventilhülse (3) anstößt, wenn der Ventileinsatz (4) von der Ventilhülse (3) entfernt und in sie eingesetzt wird.

3. Ventileinsatz (4) nach Anspruch 1 oder 2, **dadurch gekennzeichnet, dass** eine Öffnung (16) der Entlüftungsbohrung (15) von einem Rand des Ventiltellers (7) umgeben ist.

4. Entlüftungsventil (1) zum Abführen von Luft aus einer Vulkanisierform (2) eines Fahrzeugreifens, wobei das Entlüftungsventil (1) eine Ventilhülse (3) umfasst, **dadurch gekennzeichnet, dass** ein Ventileinsatz (4) nach einem der vorstehenden Ansprüche lösbar an der Ventilhülse (3) befestigt ist.

5. Entlüftungsventil (1) nach Anspruch 4, **dadurch gekennzeichnet, dass** das Entlüftungsventil (1) ohne ein Federelement zur Bewegung des Ventileinsatzes (4) versehen ist.

6. Entlüftungsventil (1) nach Anspruch 4 oder 5, **dadurch gekennzeichnet, dass** das Halteelement (8) des Ventileinsatzes der Öffnung (12) der Ventilhülse gegenüber liegt, wenn der Ventiltelller (7) einer Sitzfläche (9) der Ventilhülse (3) gegenüber liegt.

7. Verfahren zum Betreiben einer Vulkanisierform (2) eines Fahrzeugreifens, bei dem Luft durch Entlüftungsventile (1') aus der Vulkanisierform (2) abgeführt wird, wobei das Entlüftungsventil (1') eine Ventilhülse (3) umfasst, die an einem Entlüftungskanal (5) der Vulkanisierform (2) angebracht ist und ein Ventileinsatz (4') lösbar an der Ventilhülse (3) befestigt ist, wobei der Ventileinsatz (4') ohne eine Entlüftungsbohrung (15) ist und einen Ventilschaft (6') umfasst, dessen erstes Ende mit einem Ventilteller (7') versehen ist, dessen zweites Ende mit Mitteln (8) zur lösbaren Befestigung des Ventileinsatzes (4') an der Ventilhülse (3) sowie ein Federelement (19), um den Ventileinsatz (4') in Richtung einer offenen Stellung zu zwingen, **dadurch gekennzeichnet, dass** in dem Fall, dass der Ventileinsatz (4') in den Ventilhülse (3) festhängt, der Ventileinsatz (4') von den Ventilhülse (3) gelöst und entfernt wird, das Federelement (19) von der Ventilhülse (3) entfernt wird und ein Ventileinsatz (4) nach einem der Ansprüche 1 - 3 in die Ventilhülse (3) eingeführt und lösbar daran befestigt wird.

## Revendications

1. Obus de valve (4) destiné à être utilisé dans une valve de purge d'air (1) d'un moule de vulcanisation (2) d'un pneumatique de véhicule, ledit obus de valve (4) comprenant une tige de valve (6) conçue pour être introduite dans un manchon de valve (3) de la valve de purge d'air (1), une première extrémité de ladite tige de valve (6) étant pourvue d'un disque de valve (7), dans lequel la seconde extrémité de la tige de valve (6) est pourvue d'un élément de retenue élastiquement compressible (8) destiné à monter de manière démontable l'obus de valve (4) sur le manchon de valve (3) et **caractérisé en ce qu'**il comprend :
une fente (10) destinée à obtenir la compression de l'élément de retenue (8), ladite fente (10) s'étendant de la seconde extrémité de la tige de valve (6) en direction de la première extrémité de la tige de valve (6), et
dans lequel l'obus de valve (3) comprend un alésage de purge (15) destiné à retirer de l'air du moule de vulcanisation (2), et une ouverture (16) de l'alésage de purge (15) est située sur une surface avant (18) du disque de valve (7), et **caractérisé en outre en ce que** :
une autre ouverture de l'alésage de purge (15) est située au niveau d'une partie inférieure de la fente (10).

2. Obus de valve (4) selon la revendication 1, **caractérisé en ce que** l'élément de retenue (8) comprend un collet (11) au niveau de la seconde extrémité de la tige de valve (6), lequel collet (11) est conçu pour venir en butée contre l'ouverture du manchon de valve (3) lorsque l'obus de valve (15) est retiré du manchon de valve (3) et est introduit dans ce dernier.

3. Obus de valve (4) selon la revendication 1 ou la revendication 2, **caractérisé en ce qu'**une ouverture (16) de l'alésage de purge (15) est entourée par un bord du disque de valve (7).

4. Valve de purge d'air (1) destinée à retirer de l'air d'un moule de vulcanisation (2) d'un pneumatique de véhicule, laquelle valve de purge d'air (1) comprend un manchon de valve (3), **caractérisée en ce qu'**un obus de valve (4) selon l'une quelconque des revendications précédentes est monté de manière démontable sur le manchon de valve (3).

5. Valve de purge d'air (1) selon la revendication 4, **caractérisée en ce que** la valve de purge d'air (1) est prévue sans élément ressort destiné à déplacer l'obus de valve (4).

6. Valve de purge d'air (1) selon la revendication 4 ou la revendication 5, **caractérisée en ce que** l'élément de retenue (8) de l'obus de valve se trouve contre l'ouverture (12) du manchon de valve lorsque le disque de valve (7) se trouve contre une surface d'appui (9) du manchon de valve (3) .

7. Procédé de mise en œuvre d'un moule de vulcanisation (2) d'un pneumatique de véhicule, dans lequel procédé de l'air est retiré du moule de vulcanisation (2) par l'intermédiaire d'une valve de purge d'air (1'), laquelle valve de purge d'air (1') comprend un manchon de valve (3) monté sur un conduit de purge (5) du moule de vulcanisation (2) et un obus de valve (4') monté de manière démontable sur le manchon de valve (3), ledit obus de valve (4') étant dépourvu d'alésage de purge (15) et comprenant une tige de valve (6'), dont la première extrémité est pourvue d'un disque de valve (7'), la seconde extrémité étant pourvue d'un moyen (8) permettant de monter de manière démontable l'obus de valve (4') sur le manchon de valve (3), et un élément ressort (19) destiné à solliciter l'obus de valve (4') en direction d'une position ouverte, **caractérisé en ce que** :
dans le cas d'un collage de l'obus de valve (4') dans le manchon de valve (3), l'obus de valve (4') est démonté et retiré du manchon de valve (3), l'élément ressort (19) est retiré du manchon de valve (3), et un obus de valve (4) selon l'une quelconque des revendications 1 à 3 est introduit dans le manchon de valve (3) et est monté de manière démontable dans ce dernier.
